# EUROPÄISCHE PATENTSCHRIFT

(11) **EP 4 321 858 B1**
(45) Veröffentlichungstag und Bekanntmachung des Hinweises auf die Patenterteilung: **14.10.2026**
(21) Anmeldenummer: 22189271.4
(22) Anmeldetag: 08.08.2022
(51) Int. Cl.: G01N 21/954

(54) **SONDE ZUR OPTISCHEN INSPEKTION, WARTUNG UND REPARATUR VON MASCHINEN, STROMGENERATOREN, TURBINEN UND DAMPFERZEUGERN**
PROBE FOR OPTICAL INSPECTION, MAINTENANCE AND REPAIR OF MACHINES, ELECTRIC GENERATORS, TURBINES AND STEAM GENERATORS
SONDE D'INSPECTION OPTIQUE, DE MAINTENANCE ET DE RÉPARATION DE MACHINES, DE GÉNÉRATEURS ÉLECTRIQUES, DE TURBINES ET DE GÉNÉRATEURS DE VAPEUR

(43) Veröffentlichungstag der Anmeldung: 14.02.2024
(73) Patentinhaber: viZaar Industrial imaging AG, 72461 Albstadt (DE)
(72) Erfinder: Zaar, Kersten, 72461 Albstadt (DE)
(74) Vertreter: Geitz Patentanwälte PartG mbB

(56) Entgegenhaltungen:
- EP-A2- 1 958 564
- EP-A2- 2 676 597
- EP-A2- 3 943 999
- US-A- 5 570 969
- US-A1- 2007 132 840
- US-A1- 2020 061 340
- US-A1- 2020 393 387
- US-A1- 2022 211 249

## Beschreibung

Die Erfindung geht aus von einer Sonde zur optischen Inspektion, Wartung und Reparatur von Maschinen, Stromgeneratoren, Turbinen und Dampferzeugern mit einem länglichen, beweglichen Sondenschaft, welcher ein distales Ende und ein proximales Ende aufweist, und mit einem an dem distalen Ende des Sondenschafts angeordneten Sondenkopf, welcher mit mindestens einer Kamera ausgestattet ist.

Sonden werden eingesetzt, um Bereiche von Maschinen, Turbinen und Dampferzeugern zu untersuchen, die nicht ohne weiteres einsehbar oder zugänglich sind. Hierbei handelt es sich insbesondere um Hohlräume oder begrenzte Räume der Maschinen, Turbinen und Dampferzeuger. Bei Dampferzeugern handelt es sich um Wärmetauscher mit Heizrohren oder Kühlrohren. Dampferzeuger finden unter anderem Anwendung in Kernkraftwerken. Dabei strömt Primärfluid, welches von dem Kern des Kernreaktors erwärmt wird, durch ein Rohrbündel in einem Dampferzeuger. Sekundärfluid, normalerweise Wasser, welches in den die Rohre umgebenden Raum zugeführt wird, nimmt von den Rohren Wärme auf. Der dabei entstehende Wasserdampf wird für den Antrieb von Turbinen genutzt.

Bekannte Sonden weisen einem länglichen, flexiblen Sondenschaft mit einem proximalen und einem distalen Ende auf. Das distale Ende ist mit einem Sondenkopf ausgestattet. Der Sondenkopf weist eine Kamera eines Bildgebungssystems auf. Dank des flexiblen Sondenschafts kann die Sonde auch in beliebig geformte Hohlräume eingeführt werden, auch wenn deren Zugang abgewinkelt ist. Die Kamera umfasst häufig Bildsensoren auf der Basis von CCD oder CMOS. Diese wandeln optische Bilder in elektrische Signale. Da in die Hohlräume in der Regel kein oder nur wenig Licht aus der Umgebung eindringt, ist die Sonde häufig mit einer Lichtquelle ausgestattet, welche den zu untersuchenden Hohlraum beleuchtet. Darüber hinaus kann an der Sonde ein Werkzeug angeordnet sein, um den untersuchten Teil einer Maschine, eines Generators, einer Turbine oder eines Dampferzeugers gegebenenfalls unter Sichtkontrolle zu bearbeiten oder ein Fremdteil zu bergen. Der Sondenschaft weist in der Regel einen oder mehrere Kanäle auf, in welchen Versorgungsleitungen für die Kamera, die Lichtquelle, gegebenenfalls die Werkzeuge und zugehörige Versorgungsleitungen angeordnet sind. Das von einer zu untersuchenden Struktur in dem Hohlraum reflektierte Licht wird bei der in den Hohlraum eingeführten Sonde in die Kamera eingekoppelt und durch die Kamera des Bildgebungssystems in elektrische Signale umgewandelt. Am proximalen Ende des Sondenschaftes ist in der Regel eine Verbindung zu einem Bildverarbeitungssystem vorgesehen. Dieses Bildverarbeitungssystem bearbeitet die elektrischen Signale derart, dass sie an einem Sichtgerät, beispielsweise einem Monitor, angezeigt werden können oder zur Steuerung von Werkzeugen eingesetzt werden können.

Für die Untersuchung schwer erreichbarer Hohlräume sind Sonden mit einem Sondenkopf ausgestattet, der beweglich an dem Sondenschaft angeordnet ist, beispielsweise über ein Gelenk oder ein Scharnier. Der Sondenkopf kann relativ zum Sondenschaft bewegt werden. Dadurch kann der Sondenkopf relativ zum Sondenschaft so ausgerichtet werden, dass die im Sondenkopf angeordnete Kamera einen gewünschten Bereich erfassen kann.

Bekannte endoskopische Sonden, welche einen Sondenschaft mit rundem Querschnitt aufweisen, eignen sich nicht, um derartige Dampferzeuger oder sonstige Maschinen mit kleinen Zwischenräumen zwischen Rohren zu inspizieren. Um in die Zwischenräume eingeführt zu werden, muss der Sondenshaft eine ausreichende Flexibilität aufweisen. Als nachteilig erweist sich jedoch, dass sich der Sondenschaft unter Einwirkung der Gewichtskraft in unerwünschter Weise nach unten neigt. Bestimmte Bereiche in dem Dampferzeuger oder in der Maschine können daher mit dem Sondenkopf nicht erreicht werden.

An die Sonde werden bedingt durch ihren Einsatzort verschiedene Anforderungen gestellt. Der Sondenschaft muss zumindest in einer Richtung senkrecht zu seiner Längsachse ein hohe axiale Stabilität aufweisen, damit sich das distale Ende des Sondenschaftes mit dem Sondenkopf nicht in unerwünschter Weise nach unten neigt. Eine unerwünschte Neigung des Sondenschaftes führt dazu, dass ein zu untersuchender Bereich nicht mit der im Sondenkopf angeordneten Kamera erfasst werden kann. Eine weitere Anforderung besteht darin, dass der Sondenkopf zuverlässig mit dem Sondenschaft verbunden sein muss, damit sich der Sondenkopf nicht in unerwünschter Weise von dem Sondenschaft lösen kann und in dem zu untersuchenden Hohlraum zurückbleibt. Dies kann je nach Anwendungsbereich mit erheblichen Nachteilen verbunden sein. Auf den Sondenkopf können durch die zu untersuchende Struktur insbesondere dann Kräfte ausgeübt werden, wenn sich der Sondenkopf in der Struktur verfängt oder eingeklemmt wird oder wenn durch den Benutzer eine ruckartige Bewegung des Sondenkopfes ausgelöst wird.

Aus der US 5,570,969 A ist eine als Sprühlanze ausgebildete Sonde zur Anwendung in Dampferzeugern bekannt. Der Sondenschaft weist einen rechteckigen Querschnitt auf und ist mit Schläuchen für die Wasserzufuhr ausgestattet. Der Sondenkopf weist keine Kamera sondern Düsen auf, über die das im Sondenschaft zugeführte Wasser an die Umgebung der Sprühlanze abgegeben wird. Zwar ist die Sonde mit einem Faserseil ausgestattet, das über ein keilförmiges ausgebildetes Gegenstück am Sondenkopf befestigt ist. Jedoch kann auch über ein derartiges Seil nicht gewährleistet werden, dass der Sondenkopf am Sondenschaft verbleibt und nicht abreißt.

Die EP 3 943 999 A1 offenbart eine Vorrichtung zum Erkennen und Extrahieren von Fremdkörpern insbesondere in Flugzeugen. Die Fremdkörper sollen bei der Wartung des Flugzeugs erkannt und beseitigt werden, so dass von ihnen keine weitere Gefahr ausgeht. Die Vorrichtung weist ein Endoskop, ein Montagesystem zur Befestigung der Vorrichtung an einer Oberfläche, ein Gelenksystem mit Drehhebeln zur Ausrichtung des distalen Endes des Endoskops und eine Steuerung mit Monitor auf. Das distale Ende des Endoskops umfasst Lichtquellen, eine Kamera und eine Öffnung eines Arbeitskanals. Der Arbeitskanal ermöglicht das Einführen eines Werkzeugs zum Auftragen eines Dichtungsmittels auf den Fremdkörper. Hierzu umfasst das Werkzeug ein Rohr und einen in dem Rohr geführten Stößel mit einem Kopf am distalen Ende des Stößels. Die Kombination aus Rohr, Stößel und Kopf dient dazu, ein in das Rohr eingefülltes Dichtungsmittel durch eine Bewegung des Kopfes aus dem Rohr und dem Arbeitskanal des Endoskops zu befördern und auf einen Fremdkörper aufzutragen. Dadurch soll der Fremdkörper ganz oder teilweise mit dem Dichtungsmittel umschlossen und an seiner aktuellen Position fixiert werden, sofern er nicht mittels eines durch den Arbeitskanal eingeführten Greifers oder Saugers entfernt werden kann.

Die US 2022/211249 A1 offenbart ein elektronisches Endoskop für medizinische Zwecke, nämlich zur Bildgebung innerhalb eines Körperlumens, einer Körperhöhle oder eines anderen geschlossenen Raums eines Patienten. Das Endoskop weist einen Schaft mit einer im Querschnitt dehnbaren Spitze auf. Diese Spitze umfasst eine dehnbare Außenhülle, eine Kamera, einen Arbeitskanal mit variablem Querschnitt, einen Spülkanal mit variablem Querschnitt, Beleuchtungsfasern und eine flexible, geflochtene Hüllenabdeckung. Der Schaft, der Arbeitskanal, der Spülkanal und die Hüllenabdeckung können aus Polyimid, Polyamid, Polyester, Polyetheretherketon, Polyetherurethan, Polytetrafluorethylen oder Polyurethanepoxidharz bestehen oder die genannten Materialien enthalten. Zum Einführen des Endoskop-Schaftes in das Körperlumen wird der Querschnitt der Spitze reduziert. Sobald sich die distale Spitze des Endoskop-Schaftes an dem zu behandelnden Bereich befindet, wird der Querschnitt des distalen Spitze des Endoskop-Schaftes vergrößert, so dass ein Werkzeug durch den Arbeitskanal geführt und eine Spülflüssigkeit durch den Spülkanal geleitet werden kann.

Die US 2007/132840 A1) offenbart eine Sonde insbesondere zur Inspektion von Turbinen mit einem Sondenschaft und mindestens einer Kamera im Sondenkopf.

Der Erfindung liegt die Aufgabe zugrunde, eine Sonde zur optischen Inspektion, Wartung und Reparatur von Maschinen, Generatoren, Turbinen und Dampferzeugern zur Verfügung zu stellen, die eine hohe axiale Stabiltät des Sondenschaftes zumindest in einer ersten Richtung senkrecht zu der Längsachse des Sondenschaftes aufweist bei gleichzeitig hoher Flexibiltät in einer zweiten Richtung senkrecht zu der Längsachse des Sondenschaftes, wobei die erste und die zweite Richtung verschieden sind, und bei der der Sondenkopf derart zuverlässig mit dem Sondenschaft verbunden ist, dass ein unerwünschtes Lösen des Sondenkopfes vom Sondenschaft ausgeschlossen oder zumindest die Gefahr deutlich reduziert ist.

Diese Aufgabe wird durch eine Sonde mit den Merkmalen des Anspruchs 1 gelöst. Die Sonde zeichnet sich dadurch aus, dass der Sondenschaft im wesentlichen aus mindestens einem nichtmetallischen Verbundwerkstoff besteht, in welchen mindestens zwei längliche Hohlkörper aus Kunststoffen der Polyimidgruppe eingebettet sind, wobei sich die länglichen Hohlkörper durchgehend von dem proximalen Ende bis zu dem Sondenkopf am distalen Ende des Sondenschafts erstrecken. Die länglichen Hohlkörper sind derartig in den nichtmetallischen Verbundwerkstoff eingebettet, dass sie sich nicht von dem Verbundwerkstoff lösen können. Sie sind von dem Verbundwerkstoff allseitig umschlossen. Dabei sind die Hohlkörper mit dem Verbundwerkstoff vergossen oder mit diesem verklebt. Die Kombination aus nichtmetallischem Verbundwerkstoff und darin eingebettete Hohlkörper aus Polyimid führt dazu, dass der Sondenschaft gut gegen senkrecht zur Längsachse wirkende Kräfte stabilisiert ist. Dies hat zur Folge, dass sich die Sonde am Einsatzort nicht in unerwünschter Weise nach unten neigt, sondern eine im wesentlichen horizontale Ausrichtung über zumindest einen Teil der Länge des Sondenschaftes aufrecht erhält. Darüber hinaus haben die sich vom proximalen Ende des Sondenschaftes bis zum Sondenkopf erstreckenden, in den Verbundwerkstoff eingebetteten Hohlkörper aus Polyimid aufgrund der Stabilität der Kombination der Materialien die Eigenschaft, dass der Sondenkopf in zuverlässiger Weise an dem Sondenschaft gehalten ist und sich am Einsatzort nicht unerwünscht bei einem Verkanten oder Einklemmen der Sonde von dem Sondenschaft lösen kann.

Die länglichen Hohlkörper sind derart in dem Sondenschaft angeordnet, dass sie sich mit ihrer Längsachse parallel zu der Längsachse des Sondenschaftes erstrecken. Dabei sind die Hohlkörper parallel zueinander ausgerichtet.

Die aus Polyimid bestehenden Hohlkörper haben darüber hinaus weitere entscheidende Vorteile. Dank dieses Werkstoffs können die Hohlkörper sehr dünnwandig ausgebildet sein. Dies führt dazu, dass die Hohlkörper ein geringes Gewicht aufweisen und dass der Innenraum der Hohlkörper genutzt werden kann, um Aktuatoren und/ oder Versorgungsleitungen für die Kamera, eventuelle Werkzeuge oder eine Beleuchtung am Sondenkopf aufzunehmen. Aufgrund der dünnen Wandstärke der Hohlkörper weist der Sondenschaft dennoch einen vergleichsweise kleinen Querschnitt auf, so dass die Sonde gut in Hohlräume eingeführt werden kann. Dies gilt insbesondere für die Zwischenräume in Heiz- oder Kühlrohranordnungen von Wärmetauschern. Darüber hinaus beschränken die aus Polyimid bestehenden Hohlkörper nicht die Beweglichkeit des Sondenschaftes in einer zweiten Richtung senkrecht zur Längsachse des Sondenschaftes. Ferner weisen die aus Polyimid bestehenden Hohlkörper den Vorteil eines kleinen Reibungskoeffizienten auf. Die in den Hohlkörpern geführten Versorgungsleitungen oder Teile von Aktuatoren gleiten daher ohne wesentlichen Widerstand an der inneren Oberfläche der Hohlkörper, was das Einführen und Herausziehen der Versorgungsleitungen, Aktuatoren oder weiteren Bauteilen in die Hohlkörper erleichtert und die Beweglichkeit der mit Versorgungsleitungen, Aktuatoren oder weiteren Bauteilen ausgestatteten Sonde erhöht.

Nach einer vorteilhaften Ausgestaltung der Erfindung weist der Sondenschaft einen im wesentlichen rechteckigen Querschnitt auf.

Nach einer weiteren vorteilhaften Ausgestaltung der Erfindung weist der rechteckige Querschnitt eine Höhe und eine Breite auf, wobei die Höhe mindestens fünfmal größer ist als die Breite des Querschnitts. Die Höhe entspricht dabei der Querschnittslänge. Um jedoch die Querschnittslänge von der Länge der Sonde zu unterscheiden, wird an dieser Stelle der Begriff Höhe verwendet. Dieser Querschnitt trägt dazu bei, dass die Sonde in einer Richtung senkrecht zu ihrer Längsachse eine Beweglichkeit aufweist, die das Einführen der Sonde in Hohlräume vorbei an Hindernissen ermöglicht. Diese Richtung erhöhter Beweglichkeit verläuft parallel zur Schmalseite des rechteckigen Querschnitts. Parallel zu der Längsseite des rechteckigen Querschnitts ist dagegen die Beweglichkeit der Sonde so stark eingeschränkt, dass sich die Sonde nicht wesentlich in unerwünschter Weise absenken kann, wenn sie horizontal ausgerichtet ist.

Nach einer weiteren vorteilhaften Ausgestaltung der Erfindung umfasst der nichtmetallische Verbundwerkstoff des Sondenschaftes Polyurethan oder Epoxydharz in semi-elastischer Endkonsistenz. Dieses Material ist gegenüber äußeren Einflüssen am Einsatzort widerstandfähig.

Nach einer weiteren vorteilhaften Ausgestaltung der Erfindung ist der nichtmetallische Verbundwerkstoff des Sondenschaftes halogenfrei.

Nach einer weiteren vorteilhaften Ausgestaltung der Erfindung sind in den nichtmetallischen Verbundwerkstoff des Sondenschaftes Karbonfasern eingebettet.

Nach einer weiteren vorteilhaften Ausgestaltung der Erfindung bilden die Karbonfasern eine flächige Lage in dem Verbundwerkstoff des Sondenschaftes aus, wobei sich die Lage von dem proximalen bis zu dem distalen Ende des Sondenschaftes erstreckt.

Nach einer weiteren vorteilhaften Ausgestaltung der Erfindung sind in den nichtmetallischen Verbundwerkstoff des Sondenschaftes Aramidfasern eigebettet. Vorteilhafterweise sind die Aramidfasern dabei über die gesamte Länge des Sondenschaftes vom proximalen bis zum distalen Ende eingebettet. Durch die Aramidfasern wird die Zugfestigkeit der Sonde erhöht. Die Aramidfasern können beispielsweise ein- oder mehrlagig in den Verbundwerkstoff eingebettet sein. Die länglichen Aramidfasern sind bevorzugt so in dem Verbundwerkstoff ausgerichtet, dass sie parallel zur Längsachse der Sonde ausgerichtet sind. Beispielsweise kann ein Aramidband in den Verbundwerkstoff eingebettet sein.

Nach einer weiteren vorteilhaften Ausgestaltung der Erfindung ist der Sondenkopf an dem Sondenschaft beweglich angeordnet.

Nach einer weiteren vorteilhaften Ausgestaltung der Erfindung ist der Sondenkopf über ein Scharnier mit dem Sondenschaft verbunden, wobei das Scharnier ein am Sondenkopf angeordnetes Kopf-Scharnierstück und ein am Sondenschaft angeordnetes Schaft-Scharnierstück aufweist. Bevorzugt ist eine Scharnierachse, welche das Kopf-Scharnierstück mit dem Schaft-Scharnierstück verbindet, derart lösbar angeordnet, dass es zum Zwecke der Reinigung oder Wartung leicht entfernt werden kann, ohne dass hierzu weitere Teile ausgebaut werden müssen.

Nach einer weiteren vorteilhaften Ausgestaltung der Erfindung ist in dem Sondenschaft mindestens ein Sicherungsseil angeordnet, mit dem das Schaft-Scharnierstück am Sondenschaft gesichert ist. Dadurch wird verhindert, dass sich das gesamte Schaft-Scharnierstück vom Sondenschaft in unerwünschter Weise lösen kann und am Einsatzort verloren gehen kann. Insbesondere kann ausgeschlossen werden, dass das Schaft-Scharnierstück von dem Sondenschaft abreißt, wenn auf den Sondenkopf von außen Kräfte einwirken, beispielweise wenn der Sondenkopf am Einsatzort verkantet. Das Sicherungsseil kann beispielsweise aus Stahl, insbesondere Edelstahl, Karbon- oder anderen Fasern bestehen.

Nach einer weiteren vorteilhaften Ausgestaltung der Erfindung ist das Sicherungsseil vom proximalen Ende bis zum distalen Ende des Sondenschaftes und wieder zurück geführt. Vorteilhafterweise weist es ungefähr die doppelte Länge des Sondenschaftes auf. An seiner Umlenkung am distalen Ende des Sondenschaftes bildet das Sicherungsseile eine Schlaufe aus, die in einer Halteeinrichtung des Schaft-Scharnierstücks aufgenommen ist. Es kann sich hierbei beispielsweise um eine Durchgangsöffnung, eine Öse, einen Haken oder einen Bolzen in dem Schaft-Scharnierstück handeln.

Nach einer weiteren vorteilhaften Ausgestaltung bestehen der Sondenkopf und das Kopf-Scharnierstück aus einem Stück. Sondenkopf und Kopf-Scharnierstück sind einstückig ausgebildet. Dies hat den Vorteil, dass sich das Kopf-Scharnierstück nicht unerwünscht von dem Sondenkopf lösen kann.

Nach einer weiteren vorteilhaften Ausgestaltung der Erfindung ist an dem distalen Ende des Sondenschaftes und an dem Sondenkopf eine Feder aufgenommen, die bei einer Bewegung des Sondenkopfes relativ zu dem Sondenschaft ausgelenkt wird und auf den Sondenkopf eine Rückstellkraft in Richtung einer Ausgangsstellung ausübt. Die Feder verleiht der Sonde eine zusätzliche Flexibilität, so dass eine Beschädigung der Sonde oder des zu untersuchenden Gegenstandes bei einer Kollision mit einem Hindernis vermieden werden kann. Darüber hinaus erleichtert die Feder das Führen der Sonde entlang von engen Radien.

Nach einer weiteren vorteilhaften Ausgestaltung der Erfindung ist die Feder als Schraubenfeder ausgebildet und in einem der länglichen Hohlkörper aufgenommen. Sie kann sich ausgehend von dem Hohlkörper des Sondenschaftes bis in einen Hohlraum im Sondenkopf erstrecken.

Nach einer weiteren vorteilhaften Ausgestaltung der Erfindung ist an dem Sondenschaft oder an dem Sondenkopf ein Anschlag angeordnet, welcher den Bewegungsbereich des Sondenkopfes relativ zu dem Sondenschaft begrenzt. Dadurch wird erreicht, dass der Winkelbereich, in dem eine Bewegung des Sondenkopfes erfolgen kann, begrenzt ist. Eine Auslenkung über diesen Bereich hinaus wird verhindert, da diese zu einer Beschädigung der Sonde, der Kamera oder den in den Hohlkörpern angeordneten Versorgungsleitungen, Aktuatoren oder sonstigen Komponenten führen könnte.

Nach einer weiteren vorteilhaften Ausgestaltung der Erfindung ist in einem der länglichen Hohlkörper mindestens ein elastischer Glasfaser-Epoxystab lose aufgenommen. Der Glasfaser-Epoxystab ist bevorzugt an dem Schaft-Scharnierstück oder an dem Kopf-Scharnierstück befestigt. Durch einen derartigen Stab kann verhindert werden, dass der Sondenschaft in unerwünschter Weise abknickt. Bevorzugt kann der Glaserstab mit einer Feder kombiniert werden, so dass beide gemeinsam ein Abknicken des Sondenschaftes verhindern.

Nach einer weiteren vorteilhaften Ausgestaltung der Erfindung sind in dem Sondenkopf mehrere Kameras angeordnet, deren Blickfeld und/ oder Blickrichtung und/ oder Schärfenbereich unterschiedlich ist.

Nach einer weiteren vorteilhaften Ausgestaltung der Erfindung sind in mindestens einem der länglichen Hohlkörper Versorgungsleitungen für die mindestens eine Kamera angeordnet. Hierbei kann es sich um elektrische Leitungen für die Stromversorgung oder die Signalleitung oder um Leitungen handeln, die eine Kühlung des Sondenkopfes ermöglichen.

Nach einer weiteren vorteilhaften Ausgestaltung der Erfindung ist in dem Sondenkopf mindestens eine Lichtquelle angeordnet. Diese kann Licht im sichtbaren Spektralbereich emittieren. Alternativ oder kumulativ können Lichtquellen vorgesehen sein, die Licht im infraroten oder ultravioletten Spektralbereich emittieren.

Nach einer weiteren vorteilhaften Ausgestaltung der Erfindung sind in den länglichen Hohlkörpern Werkzeuge aufgenommen. Hierbei kann es sich beispielsweise um ein Bergewerkzeug handeln. Das Werkzeug wird in einen der Hohlkörper eingeführt und bis zu dem Sondenkopf vorgeschoben. An dem Sondenkopf kann ein Hohlraum oder Kanal vorgesehen sein, der sich an einen der Hohlkörper im Sondenschaft anschließt. Dieser Kanal im Sondenkopf weist bevorzugt an einer Stirnseite des Sondenkopfes eine Öffnung auf, durch die das Werkzeug aus dem Sondenkopf austreten kann, so dass eine Bearbeitung ermöglicht ist.

Nach einer weiteren vorteilhaften Ausgestaltung der Erfindung ist der Sondenschaft mit Öffnungen ausgestattet, über die Werkzeuge in die länglichen Hohlkörper eingeführt sind. Diese Öffnungen können sich an einer Stirnseite am proximalen Ende des Sondenschaftes oder einer Seite des Sondenschaftes in einem gewissen Abstand zum proximalen Ende befinden.

Nach einer weiteren vorteilhaften Ausgestaltung der Erfindung in an der Sonde eine Reinigungsdüse angeordnet, die über die Hohlkörper im Sondenschaft mit einem Reinigungsfluid versorgt wird. Hierbei kann es sich um flüssiges oder gasförmiges Reinigungsfluid handeln.

Nach einer weiteren vorteilhaften Ausgestaltung der Erfindung ist in einem der länglichen Hohlkörper ein Schlauch aufgenommen, welcher mit einem flüssigen oder gasförmigen Medium zur Bewegung oder variablen Aussteifung des Sondenschaftes gefüllt ist. Der Schlauch kann auch als pneumatischer Muskel betrieben werden.

Nach einer weiteren vorteilhaften Ausgestaltung der Erfindung besteht der Sondenkopf aus hochlegiertem Stahl. Der Sondenkopf ist somit beständig gegenüber den am Einsatzort herrschenden Bedingungen.

Nach einer weiteren vorteilhaften Ausgestaltung der Erfindung besteht der Sondenkopf aus Titan.

Nach einer weiteren vorteilhaften Ausgestaltung der Erfindung besteht der Sondenkopf aus Acrylglas.

Nach einer weiteren vorteilhaften Ausgestaltung ist am proximalen Ende des Sondenschaftes ein Metallgehäuse angeordnet. Das Metallgehäuse umschließt die in nichtmetallischen Verbundwerkstoff eingebettete längliche Hohlkörper. Die Befestigung des Gehäuses erfolgt bevorzugt durch einen oder mehrere Verbindungsbolzen, die sich durch das Metallgehäuse in ein oder mehrere Löcher in dem Verbundwerkstoff erstrecken. Bevorzugt befindet an dieser Stelle ein Aramidband im Verbundwerkstoff. In diesem Aramidband sind Durchgangsöffnungen vorgesehen, durch die die Verbindungsbolzen durchgesteckt sind. Die Verbindungsbolzen können mit dem Metallgehäuse verschweißt werden und somit formschlüssig sichern. Die länglichen Hohlkörper können in dem Metallgehäuse zu einem Stecker zusammengeführt sein. Dabei ist die Länge der länglichen Hohlkörper so gewählt, dass eine Ausdehnung beim Aufrollen der Sonde stattfinden kann und somit die Gesamtflexibilität erhöht wird. Die Enden des Sicherungsseils, das der Befestigung und Sicherung des Schaft-Scharnierstücks dient, können am Metallgehäuse befestigt sein.

Nach einer weiteren vorteilhaften Ausgestaltung der Erfindung ist die Sonde mit mindestens einer Spule ausgestattet, mit der an Maschinen, Generatoren, Turbinen oder Dampferzeugern Materialinhomogenitäten durch Wirbelstromerzeugung erfasst werden.

Nach einer weiteren vorteilhaften Ausgestaltung der Erfindung weist der Sondenschaft an seiner Außenseite eine glatte Oberfläche auf. Dadurch wird die Gefahr des Verhakens oder Verkantens des Sondenschaftes am Einsatzort reduziert.

Nach einer weiteren vorteilhaften Ausgestaltung der Erfindung ist der Sondenschaft an seiner Außenseite zumindest abschnittsweise mit einem Profil ausgestattet. Durch dieses Profil kann die Beweglichkeit des Sondenschaftes in dem betreffenden Abschnitt gezielt beeinflusst werden.

Nach einer weiteren vorteilhaften Ausgestaltung der Erfindung weist das Profil mehrere parallel zueinander verlaufende längliche Vertiefungen und/ oder Erhöhungen auf. Diese können sich über den gesamten Sondenschaft oder nur über einen Teil des Sondenschaftes erstrecken.

Nach einer weiteren vorteilhaften Ausgestaltung der Erfindung sind die länglichen Vertiefungen und/ oder Erhöhungen parallel zu einer Längsachse des Sondenschafts ausgerichtet.

Nach einer weiteren vorteilhaften Ausgestaltung der Erfindung sind die länglichen Vertiefungen und/ oder Erhöhungen senkrecht zu einer Längsachse des Sondenschafts ausgerichtet.

Nach einer weiteren vorteilhaften Ausgestaltung der Erfindung sind die die länglichen Vertiefungen und/ oder Erhöhungen unter einem von 0° und 90° verschiedenen Winkel relative zu einer Längsachse des Sondenschafts ausgerichtet.

Nach einer weiteren vorteilhaften Ausgestaltung der Erfindung weist der mit einem rechteckigen Querschnitt ausgestattete Sondenschaft an mindestens zwei seiner sich parallel zu einer Längsachse des Sondenschaftes erstreckenden Oberflächen unterschiedliche Profile auf.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele der erfindungsgemäßen Sonde dargestellt. Es zeigen:
- Figur 1: erstes Ausführungsbeispiel einer Sonde in einer Seitenansicht,
- Figur 2: perspektivische Darstellung des stark verkürzten Sondenschaftes der Sonde gemäß Figur 1,
- Figur 3: Querschnitt durch den Sondenschaft gemäß Figur 2 ,
- Figur 4: distales Ende des Sondenschaftes gemäß Figur 2 mit Sondenkopf im Längsschnitt,
- Figur 5: Sondenschaft gemäß Figur 2 im Längsschnitt,
- Figur 6: Sondenschaft eines zweiten Ausführungsbeispiels,
- Figur 7: Sondenschaft eines dritten Ausführungsbeispiels,
- Figur 8: Sondenschaft eines vierten Ausführungsbeispiels,
- Figur 9: Sondenschaft eines fünften Ausführungsbeispiels.

### Beschreibung des Ausführungsbeispiels

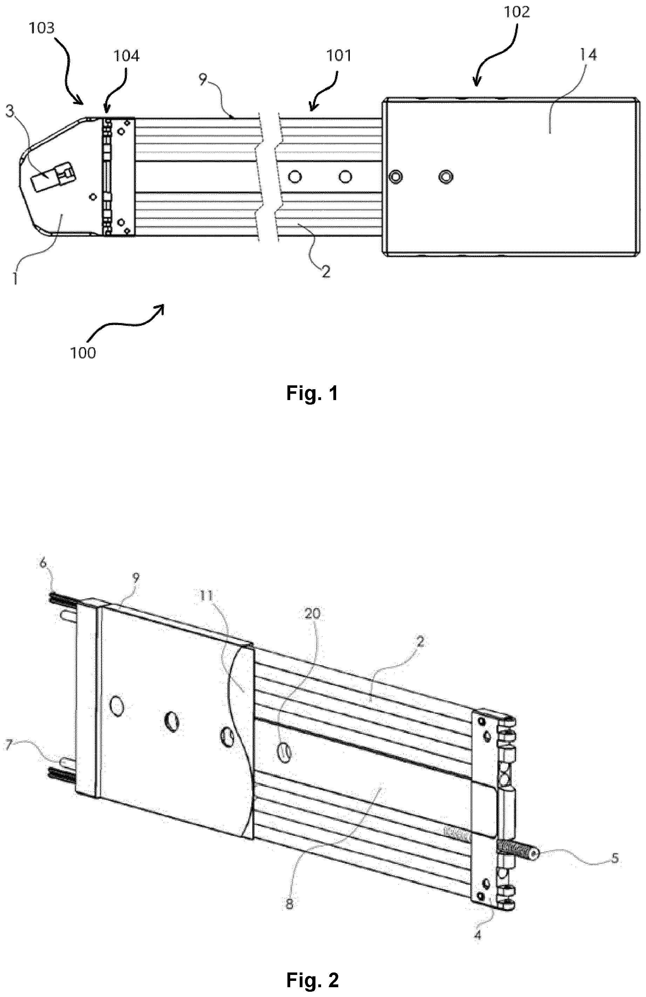

In den Figuren 1 bis 5 ist eine Sonde 100 mit einem Sondenschaft 101 und einem Sondenkopf 1 dargestellt. Der Sondenschaft weist ein proximales Ende 102 und ein distales Ende 103 auf. An dem distalen Ende 103 ist der Sondenkopf 1 über ein Scharnier 104 beweglich an dem Sondenschaft 101 befestigt. Das Scharnier 104 weist ein Schaft-Scharnierstück 4 auf, welches am Sondenschaft 101 angeordnet und fest mit diesem verbunden ist. Ferner umfasst das Scharnier 104 ein Kopf-Scharnierstück 106, welches ein Teil des Sondenkopfes 1 bildet. Das Schaft-Scharnierstück 4 und das Kopf-Scharnierstück 106 sind über einen Verbindungsbolzen 19 miteinander verbunden. Am proximalen Ende des 102 ist an dem Sondenschaft 101 ein Metallgehäuse 14 angeordnet. Der Sondenschaft 101 weist einen nichtmetallischen Verbundwerkstoff 9 auf, in den insgesamt zehn längliche Hohlkörper 10 aus Polyimid eingebettet sind. Darüber hinaus sind in den Verbundwerkstoff ein Aramidband 8 und Carbonfasern 11 eingebettet. Das Einbetten erfolgt dadurch, dass der Verbundwerkstoff, im Ausführungsführungsbeispiel Polyurethan oder Epoxidharz, in einem Gießprozess mit den Hohlkörpern 10, dem Aramidband und den Carbonfasern vergossen wird. Die Carbonfasern werden zur Verstärkung vor dem Gießen entlang der Hohlkörper angebracht, um eine Stabilität bei gleich hoher Flexibilität zu gewährleisten.

Figur 2 zeigt den Sondenschaft 101 stark verkürzt, so dass sowohl das proximale Ende 102 als auch das distale Ende 103 zu sehen sind.

Die Hohlkörper 10 sind parallel in dem Sondenschaft 101 angeordnet. Sie ermöglichen die direkte und gerade Führung von verschiedenen Einsätzen wie Sicherungsseile 6, einer Feder 5, Stangen 7, elektrische Leiter 3 und der Zeichnung nicht dargestellte optische Leiter.

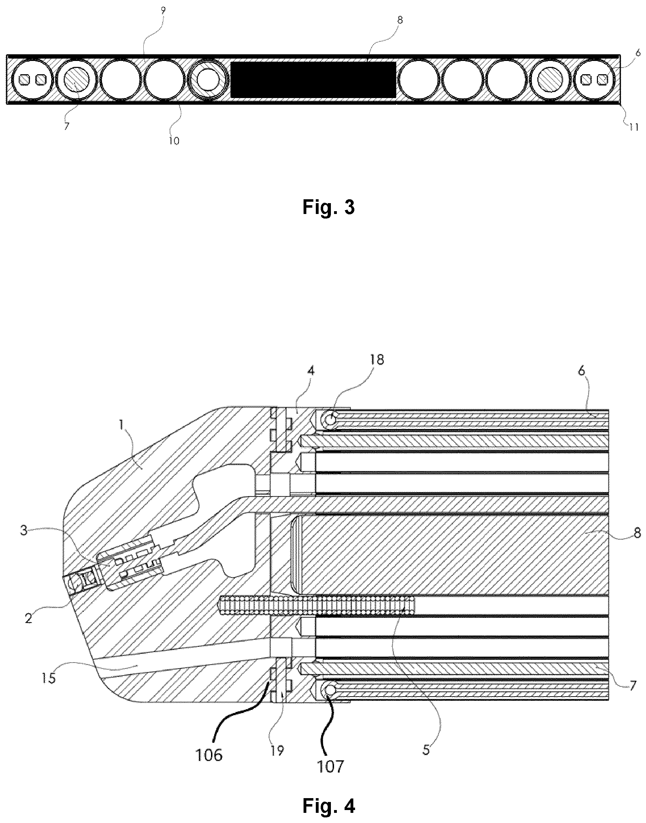

Figur 3 zeigt den rechteckigen Querschnitt des Sondenschaftes 101. Die Darstellung zeigt die Anordnung der Hohlkörper 10. Die parallel angeordneten Hohlkörper 10 sind in zwei Gruppen zu je fünf seitlich neben dem Aramidband 8 angeordnet. Die mittige Anordnung des Aramidbandes sorgt für eine Stabilisierung und gleichzeitigt auch für eine Verbindung des Sondenschaftes 101 mit dem Schaft-Scharnierstück 4 und dem Metallgehäuse 14 am proximalen Ende 102. Als axiale Verstärkung dienen die Kohlefasern 11, welche jeweils ein- oder mehrlagig oben und unten auf oder in geringer Distanz zu den Hohlkörpern 10 liegen. Der Verbundwerkstoff 9 aus Polyurethan oder Epoxidharz umhüllt alle Bestandteile und ergibt durch die speziellen Materialeigenschaften eine elastische, flexible und verstärkende Funktion.

Figur 4 zeigt das distale Ende 103 des Sondenschaftes 101 mit dem Sondenkopf 1. Die länglichen Hohlkörper 10 sind fest mit dem Schaft-Scharnierstück 4 verbunden. Die Sicherungsseile 6 bilden an dem distalen Ende 103 eine Schlaufe 107, die an einem Bolzen 18 des Schaft-Scharnierstücks 4 aufgenommen ist. In dem Sondenkopf 1 ist eine Kamera 3 mit speziell angepasster Optik 2 angeordnet. Eine Versorgungsleitung 13 der Kamera 3 ist durch einen der Hohlkörper 10 bis zum proximalen Ende 102 des Sondenschaftes 101 geführt. Die Bewegung des Sondenkopfes 1 gegenüber dem Sondenschaft 101 wird formschlüssig durch das Scharnier 104 und kraftschlüssig durch die Feder 5 begrenzt. Diese Feder 5 ist als Schraubenfeder ausgebildet. Sie ist mit einem ersten Abschnitt in einem der Hohlkörper 10 des Sondenschaftes 101 und mit einem zweiten Abschnitt im Sondenkopf 1 aufgenommen. Eine Auslenkung des Sondenkopfes 1 führt zu einer Auslenkung der Feder 5. Ihre Federkraft drückt den Sondenkopf in seine Ausgangsstellung zurück.

In dem Sondenkopf 1 ist eine Werkzeugaufnahme 15 vorgesehen, welche sich in Verlängerung einer der länglichen Hohlkörper 10 befindet. Durch den Hohlkörper kann ein in der Zeichnung nicht dargestelltes Werkszeug bis zu der Werkzeugaufnahme vorgeschoben werden. Als Werkzeuge können beispielsweise Zangen, Krokodile oder Reinigungsdüsen eingesetzt werden. Reinigungsdüsen dienen für die Reinigung von besonders schwer erreichbaren Stellen in Hohlräumen, beispielsweise von Wärmetauschern.

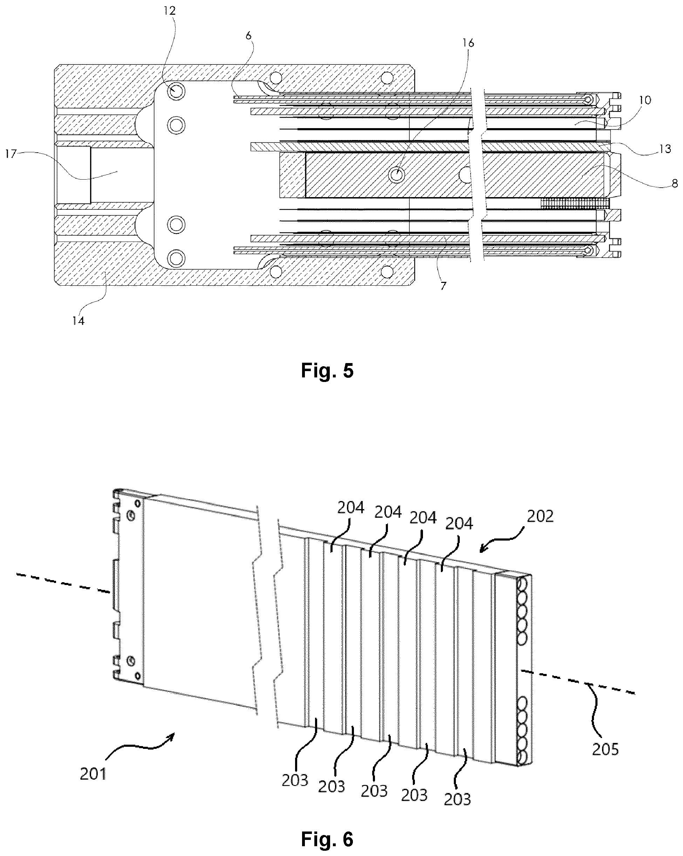

Figur 5 zeigt das proximale Ende des Sondenschaftes im Längsschnitt. Die Darstellung zeigt, dass die proximalen Enden der länglichen Hohlkörper lose in dem Metallgehäuse aufgenommen sind. Dadurch wird eine besondere Flexibilität der Hohlkörper in axialer Richtung des Sondenschaftes erreicht. Die Befestigung des Metallgehäuses 14 an dem Sondenschaft 101 erfolgt durch Bolzen 16, die in Durchgangsöffnungen 20 in dem Aramidband 8 eingesetzt und mit dem Metallgehäuse formschlüssig verbunden, insbesondere verschweißt werden. Die Durchgangsöffnungen 20 in dem Aramidband können außerdem dem Transport der Sonde dienen.

Das proximale Ende des Sondenschaftes dient der Bündelung der Inhalte der Hohlkörper aus Polyimid und als Aufnahme eines elektrischen Anschlussstückes. Die Enden der Sicherungsseile 6 werden seitlich an einem Umlenkbolzen 12 befestigt. Durch diese Befestigung ist es möglich, die Seile ein- oder auszufahren und sie nach Wunsch fein einzustellen.

Alle elektrischen und/oder optischen Kabel und Leiter laufen am offenen Ende des Metallgehäuses zu einem Kabelstecker zusammen und werden in diesem gebündelt. Für diesen in der Zeichnung nicht dargestellten Kabelstecker ist in dem Metallgehäuse 14 eine Aussparung 17 vorgesehen. Der Kabelstecker dient als Anschluss an eine in der Zeichnung ebenfalls nicht dargestellte Bildverarbeitungseinheit und einem Sichtgerät.

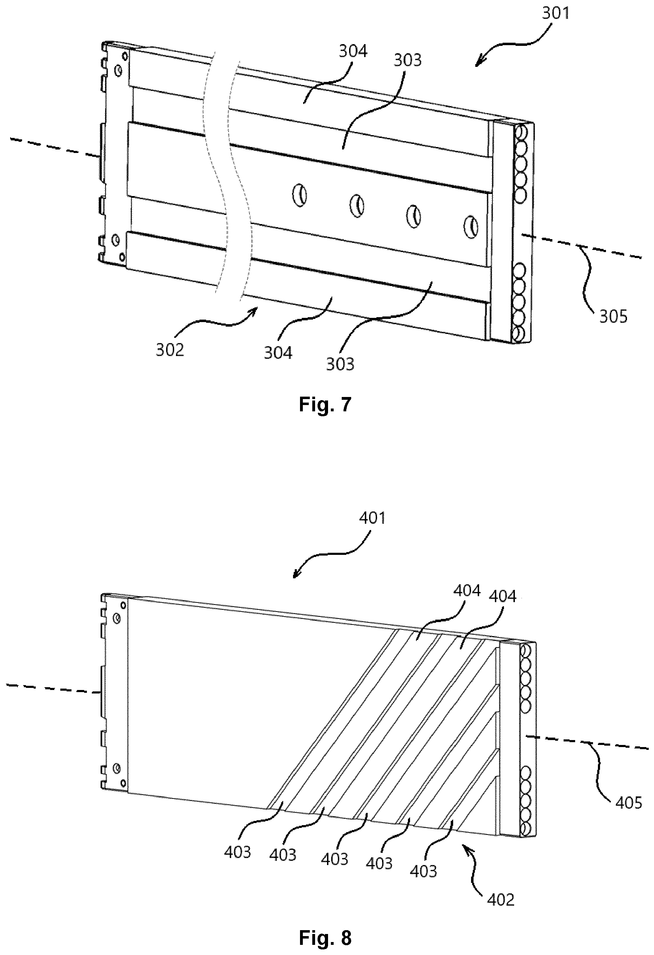

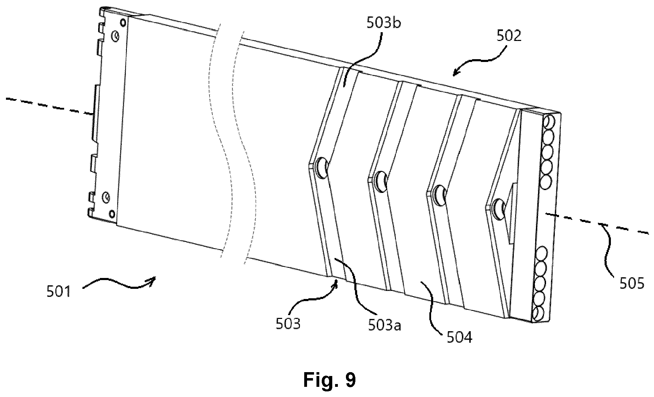

In den Figuren 6 bis 9 sind verschiedene Ausführungsbeispiele eines Sondenschaftes dargestellt. Während der Sondenschaft 101 gemäß den Figuren 1 bis 5 eine glatte Oberfläche an den Außenseiten aufweist, ist die Außenseite des Sondenschafts 201 gemäß Figur 6, des Sondenschaftes 301 gemäß Figur 7, des Sondenschafts 401 gemäß Figur 8 und des Sondenschafts 501 gemäß Figur 9 mit unterschiedlichen Profilen ausgestattet. Die Sondenschafte sind in den Figuren 6 bis 9 verkürzt dargestellt. Das Profil 202 des Sondenschaftes 201 in Figur 6 weist mehrere parallele Vertiefungen 203 und Erhöhungen 204 auf, die senkrecht zu der geometrischen Längsachse 205 des Sondenschaftes 201 ausgerichtet sind. Die geometrische Längsachse 205 ist dabei durch eine gestrichelte Linie angedeutet. Das Profil 302 des Sondenschaftes 301 in Figur 7 weist zwei Erhöhungen 304 und zwei Vertiefungen 303 auf, die parallel zur geometrischen Längsachse 305 des Sondenschaftes 301 ausgerichtet sind. Das Profil 402 des Sondenschaftes 401 gemäß Figur 8 wird durch mehrere parallele Vertiefungen 403 und Erhöhungen 404 gebildet, welche unter einen Winkel von ca. 50° relativ zur geometrischen Längsachse 405 des Sondenschaftes ausgerichtet sind. Das Profil 502 des Sondenschaftes 501 in Figur 9 wird durch mehrere Vertiefungen 503 gebildet, wobei jede der Vertiefungen 503 ist aus zwei geradlinig verlaufenden Abschnitten 503a, 503b zusammengesetzt ist. Die beiden Abschnitte 503a, 503b einer Vertiefung 503 schließen einen Winkel von ca. 120° ein. Der Winkel zwischen dem ersten Abschnitt 503a und der geometrischen Längsachse 505 des Sondenschaftes 501 beträgt ca. 60°. Der Winkel zwischen dem zweiten Abschnitt 503b und der geometrischen Längsachse 505 des Sondenschaftes 501 beträgt ebenfalls ca. 60°. Zwischen je zwei Vertiefungen 503 befindet sich eine Erhöhung 504.

### Bezugszahlenliste

- 1: Sondenkopf
- 2: Optikeinheit
- 3: Kamera
- \4: Schaft-Scharnierstück
- 5: Feder
- 6: Sicherungsseil
- 7: Stange
- 8: Aramidband
- 9: Verbundwerkstoff
- 10: Länglicher Hohlkörper aus Polyimid
- 11: Carbonfaser
- 12: Bolzen zur proximalen Befestigung des Sicherungsseils
- 13: Versorgungsleitung der Kamera
- 14: Metallgehäuse
- 15: Werkzeugaufnahme
- 16: Bolzen zur Befestigung des Metallgehäuses am Aramidband
- 17: Aussparung für Kabelstecker
- 18: Bolzen zur distalen Befestigung des Sicherungsseils
- 19: Verbindungsbolzen
- 20: Durchgangsöffnung
- 100: Sonde
- 101: Sondenschaft
- 102: proximales Ende
- 103: distales Ende
- 104: Scharnier
- 106: Kopf-Scharnierstück
- 107: Schlaufe
- 201: Sondenschaft
- 202: Profil
- 203: Vertiefung
- 204: Erhöhung
- 205: geometrische Längsachse des Sondenschafts
- 301: Sondenschaft
- 302: Profil
- 303: Vertiefung
- 304: Erhöhung
- 305: geomtrische Längsachse des Sondenschafts
- 401: Sondenschaft
- 402: Profil
- 403: Vertiefung
- 404: Erhöhung
- 405: geometrische Längsachse des Sondenschafts
- 501: Sondenschaft
- 502: Profil
- 503: Vertiefung
- 503a: Abschnitt der Vertiefung
- 503b: Abschnitt der Vertiefung
- 504: Erhöhung
- 505: geometrische Längsachse des Sondenschaftes

## Patentansprüche

1. Sonde, welche für eine optische Inspektion, Wartung und Reparatur von Maschinen, Stromgeneratoren, Turbinen und Dampferzeugern ausgebildet ist,
mit einem länglichen, beweglichen Sondenschaft (101, 201, 301, 401, 501), welcher ein proximales Ende (102) und eine distales Ende (103) aufweist,
mit einem an dem distalen Ende (103) des Sondenschafts (101, 201, 301, 401, 501) angeordneten Sondenkopf (1), welcher mit mindestens einer Kamera (3) ausgestattet ist,
wobei der Sondenschaft (101, 201, 301, 401, 501) einen nichtmetallischen Verbundwerkstoff aufweist, in welchen mindestens zwei längliche Hohlkörper (10) aus Kunststoffen der Polyimidgruppe derart eingebettet sind, dass sie allseitig von dem nichtmetallischen Verbundwerkstoff umschlossen sind, wobei die Hohlkörper (10) mit dem Verbundwerkstoff vergossen oder mit diesem verklebt sind, wobei sich die länglichen Hohlkörper (10) durchgehend von dem proximalen Ende (102) bis zu dem Sondenkopf (1) am distalen Ende (103) des Sondenschafts (101, 201, 301, 401, 501) erstrecken und
wobei der Sondenschaft (101) eine hohe axiale Stabilität in einer ersten Richtung senkrecht zu einer Längsachse (205, 305, 405, 505) des Sondenschaftes (101, 201, 301, 401, 501) aufweist bei gleichzeitig hoher Flexibilität in einer zweiten Richtung senkrecht zu der Längsachse (205, 305, 405, 505) des Sondenschaftes (101, 201, 301, 401, 501), wobei die erste und die zweite Richtung verschieden sind, derart, dass die Sonde an einem Einsatzort eine im wesentlichen horizontale Ausrichtung über zumindest einen Teil der Länge des Sondenschaftes (101, 201, 301, 401, 501) aufrecht erhält..

2. Sonde nach Anspruch 1, **dadurch gekennzeichnet, dass** der Sondenschaft (101, 201, 301, 401, 501) einen im wesentlichen rechteckigen Querschnitt aufweist.

3. Sonde nach Anspruch 2, **dadurch gekennzeichnet, dass** der rechteckige Querschnitt eine Höhe und eine Breite aufweist, wobei die Höhe mindestens fünfmal größer ist als die Breite des Querschnitts.

4. Sonde nach einem der vorhergehenden Ansprüche, **dadurch gekennzeichnet, dass** der nichtmetallische Verbundwerkstoff des Sondenschaftes (101, 201, 301, 401, 501) Polyurethan oder Epoxydharz in semi-elastischer Endkonsistenz umfasst.

5. Sonde nach einem der vorhergehenden Ansprüche, **dadurch gekennzeichnet, dass** der nichtmetallische Verbundwerkstoff des Sondenschaftes (101, 201, 301, 401, 501) halogenfrei ist.

6. Sonde nach einem der vorhergehenden Ansprüche, **dadurch gekennzeichnet, dass** in den nichtmetallischen Verbundwerkstoff des Sondenschaftes (101, 201, 301, 401, 501) Karbonfasern (11) eingebettet sind.

7. Sonde nach Anspruch 6, **dadurch gekennzeichnet, dass** die Karbonfasern (11) eine flächige Lage in dem Verbundwerkstoff des Sondenschaftes (101, 201, 301, 401, 501) ausbilden, wobei sich die Lage von dem proximalen bis zu dem distalen Ende des Sondenschaftes (101, 201, 301, 401, 501) erstreckt.

8. Sonde nach einem der vorhergehenden Ansprüche, **dadurch gekennzeichnet, dass** in den nichtmetallischen Verbundwerkstoff des Sondenschaftes (101, 201, 301, 401, 501) Aramidfasern (8) eingebettet sind.

9. Sonde nach einem der vorhergehenden Ansprüche, **dadurch gekennzeichnet, dass** der Sondenkopf (1) an dem Sondenschaft (101, 201, 301, 401, 501) beweglich angeordnet ist.

10. Sonde nach Anspruch 9, **dadurch gekennzeichnet, dass** der Sondenkopf (1) über ein Scharnier (104) mit dem Sondenschaft (101, 201, 301, 401, 501) verbunden ist, wobei das Scharnier (104) ein am Sondenkopf (1) angeordnetes Kopf-Scharnierstück (106) und ein am Sondenschaft (101, 201, 301, 401, 501) angeordnetes Schaft-Scharnierstück (4) aufweist.

11. Sonde nach Anspruch 10, **dadurch gekennzeichnet, dass** in dem Sondenschaft (101, 201, 301, 401, 501) mindestens ein Sicherungsseil (6) angeordnet ist, mit dem das Schaft-Scharnierstück (4) am Sondenschaft (101, 201, 301, 401, 501) gesichert ist.

12. Sonde nach Anspruch 11, **dadurch gekennzeichnet, dass** das Sicherungsseil (6) vom proximalen Ende (102) bis zum distalen Ende (103) des Sondenschaftes (101, 201, 301, 401, 501) und wieder zurück geführt ist, und dass das Sicherungsseil (6) an seiner Umlenkung am distalen Ende des Sondenschaftes (101, 201, 301, 401, 501) eine Schlaufe (107) ausbildet, die in einer Halteeinrichtung (18) des Schaft-Scharnierstücks (4) aufgenommen ist.

13. Sonde nach einem der Ansprüche 9 bis 12, **dadurch gekennzeichnet, dass** an dem distalen Ende (103) des Sondenschaftes (101, 201, 301, 401, 501) und an dem Sondenkopf (1) eine Feder (5) aufgenommen ist, die bei einer Bewegung des Sondenkopfes (1) relativ zu dem Sondenschaft (101, 201, 301, 401, 501) ausgelenkt wird und auf den Sondenkopf (1) eine Rückstellkraft in Richtung einer Ausgangsstellung ausübt.

14. Sonde nach Anspruch 13, **dadurch gekennzeichnet, dass** die Feder (5) als Schraubenfeder ausgebildet ist, und dass die Feder (5) in einem der länglichen Hohlkörper (10) aufgenommen ist.

15. Sonde nach einem der Ansprüche 9 bis 14, **dadurch gekennzeichnet, dass** an dem Sondenschaft (101, 201, 301, 401, 501) oder an dem Sondenkopf (1) ein Anschlag angeordnet ist, welcher den Bewegungsbereich des Sondenkopfes (1) relativ zu dem Sondenschaft (101, 201, 301, 401, 501) begrenzt.

16. Sonde nach einem der vorhergehenden Ansprüche, **dadurch gekennzeichnet, dass** in einem der länglichen Hohlkörper (10) ein elastischer Glasfaser-Epoxystab lose aufgenommen ist und dass der Glasfaser-Epoxystab an dem Schaft-Scharnierstück (4) oder an dem Kopf-Scharnierstück (105) befestigt ist.

17. Sonde nach einem der vorhergehenden Ansprüche, **dadurch gekennzeichnet, dass** in dem Sondenkopf (1) mehrere Kameras (3) angeordnet sind, deren Blickfeld und/ oder Blickrichtung und/ oder Schärfenbereich unterschiedlich ist.

18. Sonde nach einem der vorhergehenden Ansprüche, **dadurch gekennzeichnet, dass** in mindestens einem der länglichen Hohlkörper (10) Versorgungsleitungen (13) für die mindestens eine Kamera (3) angeordnet sind.

19. Sonde nach einem der vorhergehenden Ansprüche, **dadurch gekennzeichnet, dass** in dem Sondenkopf (1) mindestens eine Lichtquelle angeordnet ist.

20. Sonde nach einem der vorhergehenden Ansprüche, **dadurch gekennzeichnet, dass** in den länglichen Hohlkörpern (10) Werkzeuge aufgenommen sind.

21. Sonde nach Anspruch 20, **dadurch gekennzeichnet, dass** der Sondenschaft (101, 201, 301, 401, 501) mit seitlichen Öffnungen ausgestattet ist, über die Werkzeuge in die länglichen Hohlkörper (10) eingeführt sind.

22. Sonde nach einem der vorhergehenden Ansprüche, **dadurch gekennzeichnet, dass** in einem der länglichen Hohlkörper (10) ein Schlauch aufgenommen ist, welcher durch Druckbeaufschlagung mit einem flüssigen oder gasförmigen Medium zur variablen Aussteifung des Sondenschaftes gefüllt ist.

23. Sonde nach einem der vorhergehenden Ansprüche, **dadurch gekennzeichnet, dass** der Sondenkopf (1) aus hochlegiertem Stahl besteht.

24. Sonde nach einem der Ansprüche 1 bis 22, **dadurch gekennzeichnet, dass** der Sondenkopf (1) aus Titan besteht.

25. Sonde nach einem der Ansprüche 1 bis 22, **dadurch gekennzeichnet, dass** der Sondenkopf (1) aus Acrylglas besteht.

26. Sonde nach einem der vorhergehenden Ansprüche, **dadurch gekennzeichnet, dass** sie mit mindestens einer Spule ausgestattet ist, mit der an Maschinen, Generatoren, Turbinen oder Dampferzeugern Materialinhomogenitäten durch Wirbelstromerzeugung erfasst werden.

27. Sonde nach einem der vorhergehenden Ansprüche, **dadurch gekennzeichnet, dass** der Sondenschaft an seiner Außenseite eine glatte Oberfläche aufweist.

28. Sonde nach einem der vorhergehenden Ansprüche, **dadurch gekennzeichnet, dass** der Sondenschaft (101, 201, 301, 401, 501an seiner Außenseite zumindest abschnittsweise mit einem Profil (202, 302, 402, 502) ausgestattet ist.

29. Sonde nach Anspruch nach Anspruch 28, **dadurch gekennzeichnet, dass** das Profil (202, 302, 402, 502) mehrere parallel zueinander verlaufende längliche Vertiefungen (203, 303, 403, 503) und/ oder Erhöhungen (204, 304, 404, 504) aufweist.

30. Sonde nach Anspruch 29, **dadurch gekennzeichnet, dass** die länglichen Vertiefungen (303) und/ oder Erhöhungen (304) parallel zu einer Längsachse (305) des Sondenschafts (301) ausgerichtet sind.

31. Sonde nach Anspruch 29, **dadurch gekennzeichnet, dass** die länglichen Vertiefungen (203) und/ oder Erhöhungen (204) senkrecht zu einer Längsachse (205) des Sondenschafts (201) ausgerichtet sind.

32. Sonde nach Anspruch 2 und nach Anspruch 28, **dadurch gekennzeichnet, dass** der Sondenschaft an mindestens zwei seiner vier sich parallel zu einer Längsachse des Sondenschaftes erstreckenden Oberflächen mit unterschiedlichen Profilen ausgestattet ist.

## Claims

1. Probe configured for optical inspection, maintenance and repair of machines, power generators, turbines and steam generators, with an elongated, movable probe shaft (101, 201, 301, 401, 501) including a proximal end (102) and a distal end (103), with a probe head (1) arranged at the distal end (103) of the probe shaft (101, 201, 301, 401, 501) and equipped with at least one camera (3), wherein the probe shaft (101, 201, 301, 401, 501) includes a non-metallic composite material in which at least two elongated hollow bodies (10) made of plastics of the polyimide group are embedded such that they are enclosed on all sides by the non-metallic composite material, wherein the hollow bodies (10) are cast in or bonded to the composite material, wherein the elongated hollow bodies (10) extend continuously from the proximal end (102) to the probe head (1) at the distal end (103) of the probe shaft (101, 201, 301, 401, 501), and wherein the probe shaft (101) has high axial stability in a first direction perpendicular to a longitudinal axis (205, 305, 405, 505) of the probe shaft (101, 201, 301, 401, 501) with simultaneously high flexibility in a second direction perpendicular to the longitudinal axis (205, 305, 405, 505) of the probe shaft (101, 201, 301, 401, 501), wherein the first and the second direction are different, such that the probe maintains a substantially horizontal orientation over at least part of the length of the probe shaft (101, 201, 301, 401, 501) at an operating site.

2. Probe according to claim 1, **characterized in that** the probe shaft (101, 201, 301, 401, 501) has a substantially rectangular cross-section.

3. Probe according to claim 2, **characterized in that** the rectangular cross-section has a height and a width, wherein the height is at least five times greater than the width of the cross-section.

4. Probe according to any one of the preceding claims, **characterized in that** the non-metallic composite material of the probe shaft (101, 201, 301, 401, 501) comprises polyurethane or epoxy resin in semi-elastic final consistency.

5. Probe according to any one of the preceding claims, **characterized in that** the non-metallic composite material of the probe shaft (101, 201, 301, 401, 501) is halogen-free.

6. Probe according to any one of the preceding claims, **characterized in that** carbon fibers (11) are embedded in the non-metallic composite material of the probe shaft (101, 201, 301, 401, 501).

7. Probe according to claim 6, **characterized in that** the carbon fibers (11) form a flat layer in the composite material of the probe shaft (101, 201, 301, 401, 501), wherein the layer extends from the proximal to the distal end of the probe shaft (101, 201, 301, 401, 501).

8. Probe according to any one of the preceding claims, **characterized in that** aramid fibers (8) are embedded in the non-metallic composite material of the probe shaft (101, 201, 301, 401, 501).

9. Probe according to any one of the preceding claims, **characterized in that** the probe head (1) is movably arranged on the probe shaft (101, 201, 301, 401, 501).

10. Probe according to claim 9, **characterized in that** the probe head (1) is connected to the probe shaft (101, 201, 301, 401, 501) via a hinge (104), wherein the hinge (104) includes a head hinge piece (106) arranged on the probe head (1) and a shaft hinge piece (4) arranged on the probe shaft (101, 201, 301, 401, 501).

11. Probe according to claim 10, **characterized in that** at least one securing cable (6) is arranged in the probe shaft (101, 201, 301, 401, 501), by which the shaft hinge piece (4) is secured to the probe shaft (101, 201, 301, 401, 501).

12. Probe according to claim 11, **characterized in that** the securing cable (6) is routed from the proximal end (102) to the distal end (103) of the probe shaft (101, 201, 301, 401, 501) and back again, and **in that** the securing cable (6) forms a loop (107) at its redirection at the distal end of the probe shaft (101, 201, 301, 401, 501), which loop is received in a holding device (18) of the shaft hinge piece (4).

13. Probe according to any one of claims 9 to 12, **characterized in that** a spring (5) is received at the distal end (103) of the probe shaft (101, 201, 301, 401, 501) and on the probe head (1), which spring is deflected upon a movement of the probe head (1) relative to the probe shaft (101, 201, 301, 401, 501) and exerts a restoring force on the probe head (1) in the direction of an initial position.

14. Probe according to claim 13, **characterized in that** the spring (5) is configured as a helical spring, and **in that** the spring (5) is received in one of the elongated hollow bodies (10).

15. Probe according to any one of claims 9 to 14, **characterized in that** a stop is arranged on the probe shaft (101, 201, 301, 401, 501) or on the probe head (1), which stop limits the range of movement of the probe head (1) relative to the probe shaft (101, 201, 301, 401, 501).

16. Probe according to any one of the preceding claims, **characterized in that** an elastic glass fiber epoxy rod is loosely received in one of the elongated hollow bodies (10), and **in that** the glass fiber epoxy rod is attached to the shaft hinge piece (4) or to the head hinge piece (105).

17. Probe according to any one of the preceding claims, **characterized in that** a plurality of cameras (3) are arranged in the probe head (1), whose field of view and/or viewing direction and/or depth of field is different.

18. Probe according to any one of the preceding claims, **characterized in that** supply lines (13) for the at least one camera (3) are arranged in at least one of the elongated hollow bodies (10).

19. Probe according to any one of the preceding claims, **characterized in that** at least one light source is arranged in the probe head (1).

20. Probe according to any one of the preceding claims, **characterized in that** tools are received in the elongated hollow bodies (10).

21. Probe according to claim 20, **characterized in that** the probe shaft (101, 201, 301, 401, 501) is provided with lateral openings through which tools are introduced into the elongated hollow bodies (10).

22. Probe according to any one of the preceding claims, **characterized in that** a hose is received in one of the elongated hollow bodies (10), which hose is filled with a liquid or gaseous medium under pressure for variable stiffening of the probe shaft.

23. Probe according to any one of the preceding claims, **characterized in that** the probe head (1) consists of high-alloy steel.

24. Probe according to any one of claims 1 to 22, **characterized in that** the probe head (1) consists of titanium.

25. Probe according to any one of claims 1 to 22, **characterized in that** the probe head (1) consists of acrylic glass.

26. Probe according to any one of the preceding claims, **characterized in that** it is equipped with at least one coil with which material inhomogeneities on machines, generators, turbines or steam generators are detected by eddy current generation.

27. Probe according to any one of the preceding claims, **characterized in that** the probe shaft has a smooth surface on its outside.

28. Probe according to any one of the preceding claims, **characterized in that** the probe shaft (101, 201, 301, 401, 501) is provided on its outside, at least in sections, with a profile (202, 302, 402, 502).

29. Probe according to claim 28, **characterized in that** the profile (202, 302, 402, 502) has a plurality of elongated depressions (203, 303, 403, 503) and/or elevations (204, 304, 404, 504) running parallel to one another.

30. Probe according to claim 29, **characterized in that** the elongated depressions (303) and/or elevations (304) are aligned parallel to a longitudinal axis (305) of the probe shaft (301).

31. Probe according to claim 29, **characterized in that** the elongated depressions (203) and/or elevations (204) are aligned perpendicular to a longitudinal axis (205) of the probe shaft (201).

32. Probe according to claim 2 and according to claim 28, **characterized in that** the probe shaft is provided with different profiles on at least two of its four surfaces extending parallel to a longitudinal axis of the probe shaft.

## Revendications

1. Sonde, qui est conçue pour l'inspection optique, la maintenance et la réparation de machines, générateurs de courant, turbines et générateurs de vapeur, comportant une tige de sonde (101, 201, 301, 401, 501) allongée et mobile, qui présente une extrémité proximale (102) et une extrémité distale (103), comportant une tête de sonde (1) agencée à l'extrémité distale (103) de la tige de sonde (101, 201, 301, 401, 501), laquelle tête de sonde est pourvue d'au moins une caméra (3), dans laquelle la tige de sonde (101, 201, 301, 401, 501) présente un matériau composite non métallique dans lequel au moins deux corps creux (10) allongés en matières plastiques du groupe des polyimides sont incorporés de telle sorte qu'ils sont entourés de tous les côtés par le matériau composite non métallique, dans laquelle les corps creux (10) sont scellés ou collés au matériau composite, dans laquelle les corps creux (10) allongés s'étendent de manière continue depuis l'extrémité proximale (102) jusqu'à la tête de sonde (1) à l'extrémité distale (103) de la tige de sonde (101, 201, 301, 401, 501) et dans laquelle la tige de sonde (101) présente une grande stabilité axiale dans une première direction perpendiculaire à un axe longitudinal (205, 305, 405, 505) de la tige de sonde (101, 201, 301, 401, 501), tout en présentant une grande flexibilité dans une seconde direction perpendiculaire à l'axe longitudinal (205, 305, 405, 505) de la tige de sonde (101, 201, 301, 401, 501), dans laquelle les première et seconde directions sont différentes, de telle sorte que la sonde conserve, sur un emplacement d'utilisation, une orientation sensiblement horizontale sur au moins une partie de la longueur de la tige de sonde (101, 201, 301, 401, 501).

2. Sonde selon la revendication 1, **caractérisée en ce que** la tige de sonde (101, 201, 301, 401, 501) présente une section transversale sensiblement rectangulaire.

3. Sonde selon la revendication 2, **caractérisée en ce que** la section transversale rectangulaire présente une hauteur et une largeur, dans laquelle la hauteur est au moins cinq fois supérieure à la largeur de la section transversale.

4. Sonde selon l'une des revendications précédentes, **caractérisée en ce que** le matériau composite non métallique de la tige de sonde (101, 201, 301, 401, 501) comprend du polyuréthane ou de la résine époxy à consistance finale semi-élastique.

5. Sonde selon l'une des revendications précédentes, **caractérisée en ce que** le matériau composite non métallique de la tige de sonde (101, 201, 301, 401, 501) est exempt d'halogène.

6. Sonde selon l'une des revendications précédentes, **caractérisée en ce que** des fibres de carbone (11) sont incorporées dans le matériau composite non métallique de la tige de sonde (101, 201, 301, 401, 501).

7. Sonde selon la revendication 6, **caractérisée en ce que** les fibres de carbone (11) forment une couche plane dans le matériau composite de la tige de sonde (101, 201, 301, 401, 501), dans laquelle la couche s'étend depuis l'extrémité proximale jusqu'à l'extrémité distale de la tige de sonde (101, 201, 301, 401, 501).

8. Sonde selon l'une des revendications précédentes, **caractérisée en ce que** des fibres d'aramide (8) sont incorporées dans le matériau composite non métallique de la tige de sonde (101, 201, 301, 401, 501).

9. Sonde selon l'une des revendications précédentes, **caractérisée en ce que** la tête de sonde (1) est agencée de manière mobile sur la tige de sonde (101, 201, 301, 401, 501).

10. Sonde selon la revendication 9, **caractérisée en ce que** la tête de sonde (1) est reliée à la tige de sonde (101, 201, 301, 401, 501) par l'intermédiaire d'une charnière (104), dans laquelle la charnière (104) présente une pièce de charnière de tête (106) agencée sur la tête de sonde (1) et une pièce de charnière de tige (4) agencée sur la tige de sonde (101, 201, 301, 401, 501).

11. Sonde selon la revendication 10, **caractérisée en ce qu'**est agencé dans la tige de sonde (101, 201, 301, 401, 501) au moins un câble de sécurité (6) au moyen duquel la pièce de charnière de tige (4) est fixée à la tige de sonde (101, 201, 301, 401, 501).

12. Sonde selon la revendication 11, **caractérisée en ce que** le câble de sécurité (6) est guidé depuis l'extrémité proximale (102) jusqu'à l'extrémité distale (103) de la tige de sonde (101, 201, 301, 401, 501) et inversement, et **en ce que** le câble de sécurité (6) forme, au niveau de son point de renvoi à l'extrémité distale de la tige de sonde (101, 201, 301, 401, 501), une boucle (107) qui est logée dans un dispositif de retenue (18) de la pièce de charnière de tige (4).

13. Sonde selon l'une des revendications 9 à 12, **caractérisée en ce qu'**un ressort (5) est logé au niveau de l'extrémité distale (103) de la tige de sonde (101, 201, 301, 401, 501) et au niveau de la tête de sonde (1), ressort qui, lors d'un mouvement de la tête de sonde (1), est dévié par rapport à la tige de sonde (101, 201, 301, 401, 501) et exerce sur la tête de sonde (1) une force de rappel en direction d'une position initiale.

14. Sonde selon la revendication 13, **caractérisée en ce que** le ressort (5) est conçu sous la forme d'un ressort hélicoïdal, et **en ce que** le ressort (5) est logé dans l'un des corps creux (10) allongés.

15. Sonde selon l'une des revendications 9 à 14, **caractérisée en ce qu'**une butée est agencée sur la tige de sonde (101, 201, 301, 401, 501) ou sur la tête de sonde (1), laquelle butée limite la plage de mouvement de la tête de sonde (1) par rapport à la tige de sonde (101, 201, 301, 401, 501).

16. Sonde selon l'une des revendications précédentes, **caractérisée en ce qu'**une barre époxy élastique en fibre de verre est logée de manière lâche dans l'un des corps creux (10) allongés et **en ce que** la barre époxy en fibre de verre est fixée à la pièce de charnière de tige (4) ou à la pièce de charnière de tête (105).

17. Sonde selon l'une des revendications précédentes, **caractérisée en ce que** plusieurs caméras (3) sont agencées dans la tête de sonde (1), caméras dont le champ de vision et/ou la direction de visée et/ou la plage de mise au point sont différents.

18. Sonde selon l'une des revendications précédentes, **caractérisée en ce que** des conduites d'alimentation (13) destinées à l'au moins une caméra (3) sont agencées dans au moins l'un des corps creux (10) allongés.

19. Sonde selon l'une des revendications précédentes, **caractérisée en ce qu'**au moins une source lumineuse est agencée dans la tête de sonde (1).

20. Sonde selon l'une des revendications précédentes, **caractérisée en ce que** des outils sont logés dans les corps creux (10) allongés.

21. Sonde selon la revendication 20, **caractérisée en ce que** la tige de sonde (101, 201, 301, 401, 501) est pourvue d'ouvertures latérales par l'intermédiaire desquelles les outils sont introduits dans les corps creux (10) allongés.

22. Sonde selon l'une des revendications précédentes, **caractérisée en ce qu'**est logé dans l'un des corps creux (10) allongés un tuyau souple qui est rempli par pressurisation d'un milieu liquide ou gazeux pour un raidissement variable de la tige de sonde.

23. Sonde selon l'une des revendications précédentes, **caractérisée en ce que** la tête de sonde (1) est constituée d'acier fortement allié.

24. Sonde selon l'une des revendications 1 à 22, **caractérisée en ce que** la tête de sonde (1) est constituée de titane.

25. Sonde selon l'une des revendications 1 à 22, **caractérisée en ce que** la tête de sonde (1) est constituée de verre acrylique.

26. Sonde selon l'une des revendications précédentes, **caractérisée en ce qu'**elle est pourvue d'au moins une bobine au moyen de laquelle sont détectées, sur des machines, générateurs, turbines ou générateurs de vapeur, des hétérogénéités de matière par la génération de courants de Foucault.

27. Sonde selon l'une des revendications précédentes, **caractérisée en ce que** la tige de sonde présente une surface lisse sur son côté externe.

28. Sonde selon l'une des revendications précédentes, **caractérisée en ce que** la tige de sonde (101, 201, 301, 401, 501) est pourvue, sur son côté externe, au moins dans certaines sections, d'un profilé (202, 302, 402, 502).

29. Sonde selon la revendication 28, **caractérisée en ce que** le profilé (202, 302, 402, 502) présente plusieurs évidements (203, 303, 403, 503) et/ou élévations (204, 304, 404, 504) allongés s'étendant parallèlement les uns aux autres.

30. Sonde selon la revendication 29, **caractérisée en ce que** les évidements (303) et/ou élévations (304) allongés sont orientés parallèlement à un axe longitudinal (305) de la tige de sonde (301).

31. Sonde selon la revendication 29, **caractérisée en ce que** les évidements (203) et/ou élévations (204) allongés sont orientés perpendiculairement à un axe longitudinal (205) de la tige de sonde (201).

32. Sonde selon la revendication 2 et selon la revendication 28, **caractérisée en ce que** la tige de sonde est pourvue de profilés différents sur au moins deux de ses quatre surfaces s'étendant parallèlement à un axe longitudinal de la tige de sonde.
